# EUROPÄISCHE PATENTSCHRIFT

(11) **EP 2 002 741 B1**
(45) Veröffentlichungstag und Bekanntmachung des Hinweises auf die Patenterteilung: **15.05.2013**
(21) Anmeldenummer: 07006073.6
(22) Anmeldetag: 23.03.2007
(51) Int. Cl.: A41D 13/00, A41D 31/00, A61F 7/00, B32B 5/16

(54) **Verdunstungselement und Verfahren zu dessen Herstellung**
Evaporation element and method for its manufacture
Elément de vaporisation et son procédé de fabrication

(43) Veröffentlichungstag der Anmeldung: 17.12.2008
(73) Patentinhaber: Sefar AG, 9410 Heiden (CH)
(72) Erfinder: Maurer, Christoph, CH-8044 Zürich (CH); Schindele Ronald, 8050 Zürich (CH); Friedl, Markus Josef, 8001 Zurich (CH); Gross, Daniel M., 2000 Neuenburg (CH)
(74) Vertreter: Wunderlich, Rainer

(56) Entgegenhaltungen:
- WO-A-2006/079234
- DATABASE WPI Week 199813 Derwent Publications Ltd., London, GB; AN 1998-139668 XP002447993 & JP 10 016104 A (MITSUBISHI PAPER MILLS LTD) 20. Januar 1998 (1998-01-20)

## Beschreibung

Die Erfindung betrifft zum einen ein Verdunstungselement mit einer Diffusionsschicht, welche eine textile Struktur zum flächigen Verteilen einer zu verdunstenden Flüssigkeit aufweist, gemäß dem Oberbegriff des Anspruchs 1.

Die Erfindung betrifft zum anderen ein Verfahren zum Herstellen eines Verdunstungselementes mit einer Diffusionsschicht zum flächigen Verteilen einer zu verdunstenden Flüssigkeit, bei dem das Verdunstungselement aus Bahnen gebildet wird, welche entlang ihrer Längskanten an einem Nahtbereich miteinander verbunden werden, gemäß dem Oberbegriff des Anspruchs 14.

Ein gattungsbildendes Verdunstungselement und ein gattungsbildendes Verfahren sind aus der WO 2006/079234 A2 bekannt. Hierin sind auch die vielfältigen Einsatzmöglichkeiten für ein Verdunstungselement angegeben, welche von Kleidungsstücken bis zu großflächigen Markisen und Sonnenschutzabdeckungen reichen können. In ein derartiges mehrschichtig aufgebautes Verdunstungselement wird Flüssigkeit über Zuführkanäle aus einem hoch liegenden Behälter oder über eine Pumpe eingeleitet. In einer Diffusionsschicht wird die Flüssigkeit in der textilen Struktur verteilt, so dass diese großflächig über eine poröse Verdampfungsschicht verdunsten kann. Hierdurch wird ein angenehmer Kühlungseffekt erzielt.

Aus der Database WPI Week 199813 ist eine antibakterielle wasserdurchlässige Platte mit hydrophilen Fasern, Bindefasern, einem hydrophilen Pulver und antibakteriellen Fasern bekannt. Die hydrophilen Fasern haben einen Querschnitt mit einer irregulären Form und weisen an ihrer Oberfläche Einkerbungen auf. Hierdurch soll eine wasserdurchlässige Platte geschaffen werden.

Ein Verdunstungselement zum Einsatz im Zusammenhang mit Kraftfahrzeugen ist aus der US-A-4,342,203 bekannt. Wird das Verdunstungselement etwa als Abdeckplane für ein Kraftfahrzeug verwendet, besteht das Problem, dass Flüssigkeit sich schwerkraftbedingt in tiefer liegende Bereiche des Verdunstungselementes ansammelt und dort sogar im flüssigen Zustand austreten könnte, während andere Bereiche nicht oder nicht ausreichend mit Flüssigkeit versorgt werden.

Der Erfindung liegt die **Aufgabe** zugrunde, ein Verdunstungselement und ein Verfahren zu dessen Herstellung anzugeben, mit welchen eine gute innere Flüssigkeitsverteilung auch bei größeren Flächen ermöglicht wird.

Die Aufgabe wird zum einen durch ein Verdunstungselement mit den Merkmalen des Anspruchs 1 und zum anderen durch ein Verfahren mit den Merkmalen des Anspruchs 14 gelöst. Bevorzugte Ausführungsformen sind in den jeweils abhängigen Ansprüchen angegeben.

Das erfindungsgemäße Verdunstungselement ist dadurch gekennzeichnet, dass die textile Struktur der Diffusionsschicht eine Vielzahl von Fibrillen umfasst, die entlang ihrer Außenseite mit Längsrillen versehen sind.

Gemäß einer Erkenntnis der Erfindung ist für die Flüssigkeitsverteilung innerhalb der Diffusionsschicht eine Kapillarwirkung entscheidend. Die Kapillarwirkung ergibt sich dabei auch durch die zwischen den einzelnen Fibrillen verbliebenen Zwischenräume, durch welche die Flüssigkeit aufgrund des Kapillareffektes entlang der Längsrichtung der Fibrillen geleitet wird.

Erfindungsgemäß wird dieser Kapillareffekt noch dadurch verstärkt, dass entlang der Außenseite jeder Fibrille eine oder mehrere Längsrillen ausgebildet sind. Auch bei einer dichteren Packung der Fibrillen wird so ein gewünschter ausreichender Freiraum innerhalb der textilen Struktur geschaffen, durch welchen Flüssigkeit aufgrund des Kapillareffektes fließen kann. Durch diesen besonders hohen Kapillareffekt kann eine Flüssigkeitsverteilung auch entgegen der Schwerkraft erfolgen, so dass das erfindungsgemäße Verdunstungselement für schräge Markisen oder auch für Kleidungsstücke hervorragend einsetzbar ist. In wirtschaftlicher Hinsicht ist die Verwendung von Wasser oder einer Flüssigkeit auf Wasserbasis sinnvoll. Es sind aber auch andere Flüssigkeiten, etwa auf Basis von Alkohol, geeignet.

Nach der Erfindung ist es besonders vorteilhaft, dass die Fibrillen eine Vielzahl von Längsrillen aufweisen, deren Tiefe und Breite geringer als 1 µm sind. Diese feinen Längsrillen der Fibrillen sorgen insbesondere im Zusammenwirken im Multifilgarn mit den Längsrillen angrenzender Fibrillen für einen gewünschten Kapillareffekt.

Besonders bevorzugt ist es nach der Erfindung, dass die Fibrillen mindestens eine rinnenartige Längsrille aufweisen, deren Tiefe und Breite größer als 1 µm, vorzugsweise zwischen 1 µm und 5 µm, sind. Besonders bevorzugt ist eine Tiefe und Breite zwischen 1,5 µm bis 2,5 µm. Jede Fibrille weist in der Regel nur eine oder nur wenige derartige, relativ große Längsrillen auf, welche auch bei einer dichten Packung der Fibrillen für eine ausreichende Kapillarwirkung sorgen. Die Längsrillen können durch eine entsprechende Konturierung der Spinndüsen vorgegeben werden.

Nach der Erfindung ist vorgesehen, dass die Fibrillen einen Durchmesser von 10 µm bis 100 µm, vorzugsweise etwa 50 µm, aufweisen. Die Fibrillen können dabei eine etwa kreisrunde oder ovale Form aufweisen. Besonders bevorzugt ist es nach der Erfindung, dass die Fibrillen im Querschnitt jedoch etwa nierenförmig gestaltet sind, wobei die relativ große rinnenartige Längsrille von wulstartigen Seitenbereichen umgeben ist. Die Länge der einzelnen Fibrillen kann zwischen einigen Millimetern bis zu mehreren Kilometern betragen.

Grundsätzlich kann die textile Struktur eine nicht-gewebte Struktur, etwa ein Vlies oder sogenannte Nähgewirke sein, bei welchen gewisse Vorzugsrichtungen der verwirkten Fibrillen einstellbar sind. Besonders vorteilhaft ist es nach der Erfindung, dass die textile Struktur der Diffusionsschicht ein Gewebe mit einem Multifilgarn umfasst, welches die Vielzahl von Fibrillen aufweist. Das Gewebe kann ausschließlich aus derartigen Multifilgarnen oder auch in Kombination mit anderen Garnen, insbesondere Monofilgarnen, gebildet sein. Multifilgarne im Sinne der Erfindung sind Garne, welche aus einer Vielzahl der Fibrillen mit der Längsrillenstruktur aufgebaut und versponnen sind. Aufgrund der aneinander angrenzenden Außenseiten mit der Rillenstruktur wird ein erheblicher Teil der Flüssigkeit innerhalb des Multifilgarnes in Garnlängsrichtung geleitet. Das Multifilgarn bietet so einen besonders starken und gerichteten Kapillareffekt und dient sozusagen als eine Autobahn zur Flüssigkeitsleitung.

Eine besonders gute Kapillarwirkung wird nach der Erfindung dadurch erzielt, dass das Multifilgarn aus 10:000 bis 300.000 Fibrillen pro cm² Querschnittsfläche aufgebaut ist und dass der Abstand der Fibrillen zueinander überwiegend kleiner als 2 µm ist.

Grundsätzlich kann die Diffusionsschicht alleine das Verdunstungselement bilden. Ein besonders guter Verdunstungs- und Kühlungseffekt wird erfindungsgemäß dadurch erreicht, dass die textile Struktur der Diffusionsschicht zu mindestens einer Seite eine poröse Verdampfungsschicht aufweist. Die Verdampfungsschicht ist von der Flüssigkeit in der Diffusionsschicht im dampfförmigen Zustand durchdringbar. Die poröse Verdampfungsschicht ist insbesondere eine Membran, welche eine Porosität von mindestens 80% und eine Porengröße von etwa 0,7 µm aufweist. Die Dicke der Membran kann vorzugsweise etwa 20 µm betragen, wobei ein Durchtritt der Flüssigkeit nur in Dampfform ermöglicht wird. Die Membran ist in bekannter Weise aus einem Kunststoff, etwa PE oder PTFE gebildet oder PU (Polyurethan) koaguliert. Die poröse Verdampfungsschicht bietet Schutz vor Verschmutzung und Verkeimung der Diffusionsschicht. Vorzugsweise können zu beiden Seiten der Diffusionsschicht Verdampfungsschichten angeordnet sein. Hierdurch kann eine Verdunstung der Flüssigkeit zu beiden Seiten erfolgen.

Eine alternative Ausgestaltung des erfindungsgemäßen Verdunstungselementes besteht darin, dass die textile Struktur der Diffusionsschicht zu einer Seite eine dichte Sperrschicht aufweist. Diese Sperrschicht ist flüssigkeitsdicht und praktisch dampfundurchlässig, so dass eine Verdunstung nur zu einer Seite hin erfolgen kann. Eine derartige Dampfsperre kann beispielsweise aus Polyurethan mit einer Schichtdicke von 0,1 mm bis 1 mm gefertigt sein. Damit das Verdunstungselement insgesamt eine textilartige Anordnung aufweist, ist die Dampfsperre vorzugsweise transparent ausgebildet.

Weiter ist es nach der Erfindung vorteilhaft, dass mindestens eine Schutzschicht mit Gewebe vorgesehen ist. Dieses Schutzgewebe, welches offenmaschig oder geschlossenmaschig sein kann, ist insbesondere auf der empfindlichen porösen Verdampfungsschicht angeordnet, um diese empfindliche Schicht vor mechanischen äußeren Einflüssen zu schützen. Das Schutzgewebe kann eine Maschenweite zwischen 0,1 mm und 1 mm aufweisen, wobei vorzugsweise eine offene Fläche von etwa 1/3 gebildet ist. Der Garndurchmesser kann etwa 70 µm betragen. Eine geringe Schmutzempfindlichkeit wird dadurch erreicht, dass ein Monofilamentgarn insbesondere aus ETFE (Ethylentetrafluorethylen) verwendet wird. Durch ein oder mehrere Schutzschichten kann auch die Festigkeit des flächigen Verdunstungselementes insgesamt erhöht werden.

Eine besonders gute Kapillarwirkung bei einer hohen Stabilität und Festigkeit des Verdunstungselementes wird erfindungsgemäß dadurch erzielt, dass die Fibrillen aus einem Material gebildet sind, welches PETP (Polyester), PEN (Polyethylene Naphtalate), PP (Polypropypylene), PEEK (Ployetheretherketone), LCP (Liquid Cristal Polyester), UHMWPE (Ultra high Molecularweight Polyethylene), PTFE (Polytetrafluorethylene), ETFE (Ethylene Tetrafluorethylene), PVDF (Polyvinilidenfluorid) und/oder PAC (Polyacrylnitril) umfasst. Es können auch mineralische und/oder keramische Werkstoffe umfasst sein, etwa S-Glas, R-Glas oder CF (Kohlenstoff), welche ebenfalls zur Faserherstellung eingesetzt werden.

Eine Verstärkung des Kapillareffektes wird nach einer vorteilhaften Weiterbildung der Erfindung dadurch erreicht, dass das Gewebe der Diffusionsschicht hydrophil ausgebildet ist. Dies kann insbesondere bei einem eigentlich hydrophoben Gewebe dadurch erreicht werden, dass die Fibrillen, das daraus gesponnene Garn und/oder das Gewebe mit einem hydrophilen Mittel behandelt, insbesondere beschichtet werden. Beispielsweise kann dies durch ein Imprägnieren mit Tensiden oder einer Plasmabehandlung erfolgen.

Ein besonders kompakter und strapazierfähiger Aufbau des Verdunstungselementes wird nach der Erfindung dadurch erreicht, dass die Schichten miteinander verklebt oder verschweißt sind. Das Verkleben kann durch einen pulverförmigen Klebstoff oder durch ein loses feines Vlies, ein sogenanntes Spyderweb erfolgen, so dass die Durchgängigkeit zwischen den Schichten, insbesondere der Diffusionsschicht und der Verdampfungsschicht weiter gewährleistet ist.

Eine Zuführung der Flüssigkeit zur Diffusionsschicht erfolgt über Längs- und/oder Querkanäle. Diese können Schaumstoffkanäle sein, welche sich auf oder in der Diffusionsschicht erstrecken.

Für eine gute Flächenverteilung der Flüssigkeit ist es erfindungsgemäß, dass das Verdunstungsgewebe aus Bahnen aufgebaut ist, welche entlang ihrer Längskanten miteinander verbunden, insbesondere verschweißt oder verklebt sind, wobei Nahtbereiche gebildet sind, und dass entlang der Nahtbereiche Zuführkanäle zum Zuführen und Abgeben der Flüssigkeit an die Diffusionsschicht angeordnet sind. Hierdurch kann ein sehr großflächiges Verdunstungselement geschaffen werden, wobei entlang der Nahtbereiche der einzelnen Bahnen die Zuführkanäle ausgebildet sind. Somit stellen die Zuführkanäle keine zusätzlichen Störungen in dem flächigen Verdunstungselement dar, so dass entlang der Bahnen eine ungestörte Flüssigkeitsverteilung ermöglicht wird.

Das erfindungsgemäße Verfahren zum Herstellen eines Verdunstungselementes ist nach der Erfindung dadurch gekennzeichnet, dass entlang des Nahtbereiches ein Zuführkanal zum Zuführen und Abgeben der Flüssigkeit an die Diffusionsschicht angeordnet wird. Hierdurch ergeben sich die zuvor beschriebenen Vorteile. Die Bahnen können eine Breite von 1 m bis 3 m aufweisen, wobei eine wirtschaftliche Fertigung auch großer Planen bei guter Flüssigkeitsverteilung ermöglicht wird.

Die Erfindung umfasst auch ein gemäß diesem Verfahren hergestelltes Verdunstungselement.

Um eine gute Flüssigkeitseinleitung entlang der Zuführkanäle in die Diffusionsschicht zu erreichen, ist es erfindungsgemäß, dass die Verdampfungsschicht im Bereich der Zuführkanäle zumindest bereichsweise entfernt wird. Somit kann Flüssigkeit aus den Zuführkanälen unmittelbar in die Diffusionsschicht gelangen, so dass die Flüssigkeit sehr schnell in der Diffusionsschicht verteilt werden kann.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Querschnittsansicht zum Aufbau eines erfindungsgemäßen Verdunstungselementes;
- Fig. 2: eine schematische Querschnittsansicht von einem Verdunstungselement mit Zuführkanal;
- Fig. 3-8: Mikroskopaufnahmen von Fibrillen für das erfindungsgemäße Verdunstungselement.

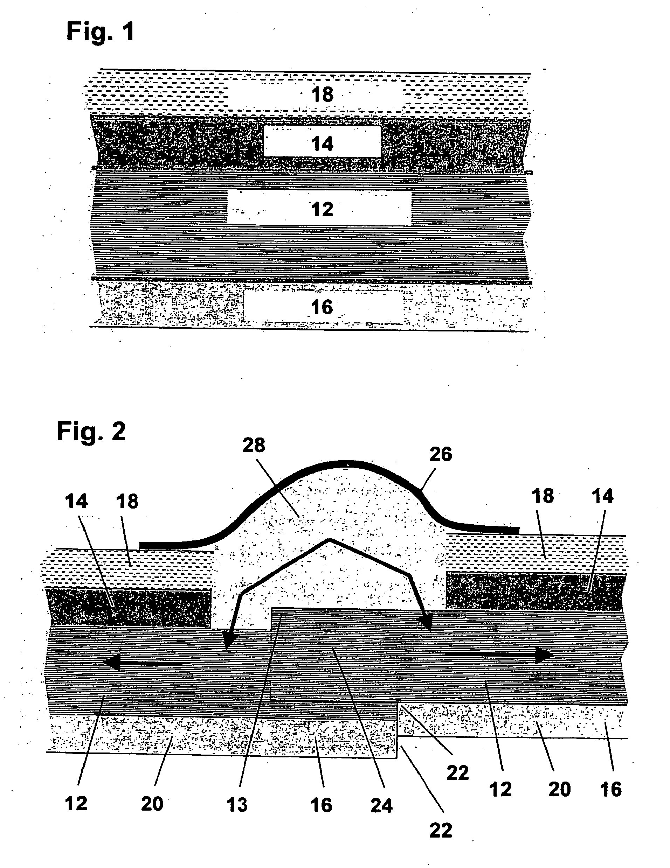

Ein erfindungsgemäßes Verdunstungselement 10 gemäß Figur 1 weist eine Diffusionsschicht 12 zur Verteilung der Flüssigkeit innerhalb des flächigen Verdunstungselementes 10 auf. Die Diffusionsschicht ist aus einem Multifilgewebe aufgebaut, welches zumindest in wesentlichen Teilen aus Multifilgarnen gewebt ist. Die Diffusionsschicht 12 mit einer Dicke von 0,5 mm dient auch zur mechanischen Festigkeit.

Nach unten angrenzend an die Diffusionsschicht 12 ist eine Sperrschicht 16 angeordnet. Die Sperrschicht 16 ist wasserdicht und dampfdicht ausgebildet. Sie dient zum Schutz vor Schmutz und mechanischer Beschädigung von unten und verhindert, dass Flüssigkeit nach unten verdunstet. Die Sperrschicht 16 kann farblos oder in einer beliebigen Farbe eingefärbt sein. Die Schichtdicke beträgt etwa 0,15 mm.

Oberhalb der Diffusionsschicht 12 ist eine Membran als poröse Verdampfungsschicht 14 von etwa 20 µm Dicke angeordnet. Die in der Diffusionsschicht 12 verteilte Flüssigkeit kann als Wasserdampf die Verdampfungsschicht 14 durchdringen, jedoch nicht als Flüssigkeit, da sie flüssigkeitsundurchlässig ist. Die Verdampfungsschicht 14 dient auch zum Schutz der Diffusionsschicht 12 gegen Schmutz sowie von einer Kontaminierung durch Algen, Bakterien und Pilze.

Die darüber angeordnete Schutzschicht 18 mit einer Dicke von 0,12 mm ist aus einem offenmaschigen Gewebe gebildet und dient zum Schutz der empfindlichen, dünnen Verdampfungsschicht 14.

Ein Verdunstungselement 10 gemäß Figur 2 kann aus Bahnen 20 aufgebaut sein, welche jeweils den Schichtaufbau gemäß Figur 1 aufweisen. Entlang einer Längskante 22 der Sperrschicht 16 werden die Bahnen 20 auf Stoß angelegt. Gemäß Figur 2 ist dabei die rechte Bahn 20 so ausgebildet, dass die Diffusionsschicht 12 über die Längskante 22 der Sperrschicht 16 hinausragt, wobei ein Vorsprung 13 der Diffusionsschicht 12 gebildet ist. Der Vorsprung 13 überlappt dabei mit der angrenzenden Diffusionsschicht 12 der anderen Bahn 20 und wird mit dieser verbunden, insbesondere thermisch verschweißt. Im verschweißten Nahtbereich 24 des Vorsprungs 13 ist die Diffusionsschicht 12 nicht mehr flüssigkeitsleitend. In dem darüberliegenden und dem angrenzenden Bereich sind bei den beiden so verbundenen Bahnen 20 die jeweilige Verdampfungsschicht 14 und die Schutzschicht 18 im Nahtbereich 24 entfernt, so dass ein Freiraum für den Zuführkanal gebildet ist. Mittels einer gewölbten Abdeckfolie 26, welche sich längs des Nahtbereiches 24 erstreckt, wird der so gebildete Freiraum zur Bildung eines Zuführkanales 28 abgedeckt und flüssigkeitsdicht gegenüber der Umgebung abgeschlossen. Die Abdeckfolie 26 wird hierzu mit den Oberseiten der beiden Bahnen 20 flüssigkeitsdicht verbunden.

Der so gebildete Zuführkanal 28 wird an zumindest einer Seite mit einer Pumpe oder einem Flüssigkeitsbehälter verbunden, so dass Flüssigkeit in dem Zuführkanal 28 längs dem Nahtbereich 24 fließen, und zu beiden Seiten des flüssigkeitsdicht verschweißten Nahtbereiches 24 in die Diffusionsschicht 12 gelangen kann. Der Fluss der Flüssigkeit ist in Figur 2 durch schwarze Pfeile angedeutet. Die Überlappung der angrenzenden Diffusionsschichten 12 und deren flüssigkeitsdichtes Verbinden im Nahtbereich 24 schafft eine zuverlässige flüssigkeitsdichte Verbindung der beiden angrenzenden Bahnen 20 nach unten zur Sperrschicht 16 hin.

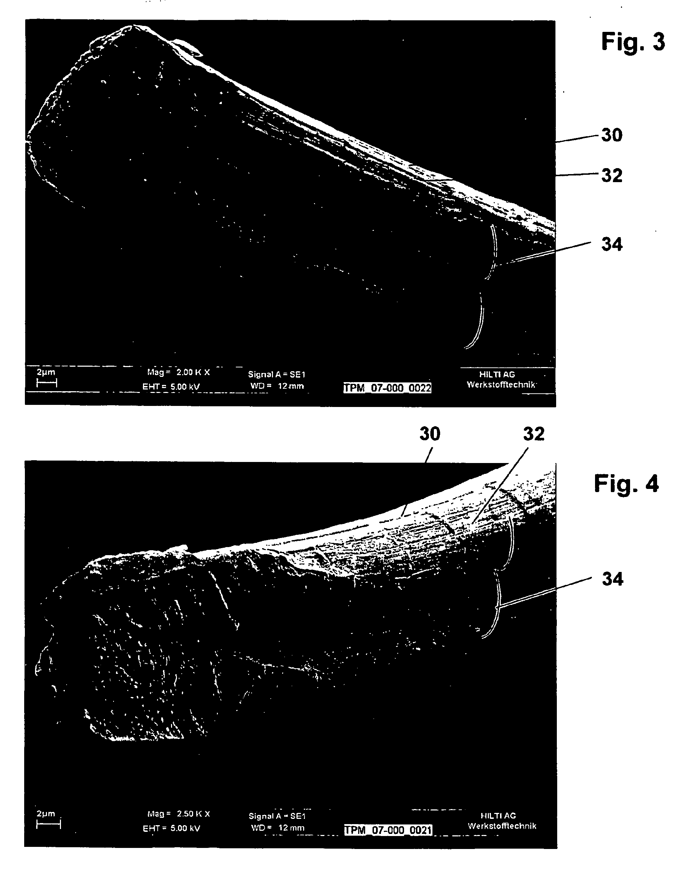

In den Figuren 3 bis 4 ist die Struktur der erfindungsgemäßen Fibrillen 30 näher gezeigt. Im vorliegenden Beispiel weisen diese einen etwa kreisrunden Querschnitt auf, wobei eine V-förmige Kerbe als rinnenartige Längsrille 34 sich entlang einer Längsachse der Fibrille 30 erstreckt. Angrenzend an diese rinnenartige Längsrille 34 sind an der Außenseite weitere feine Längsrillen 32 ausgebildet, welche im Verbund mit angrenzenden Fibrillen in einem Multifilgarn zu einer hervorragenden Kapillarwirkung führen.

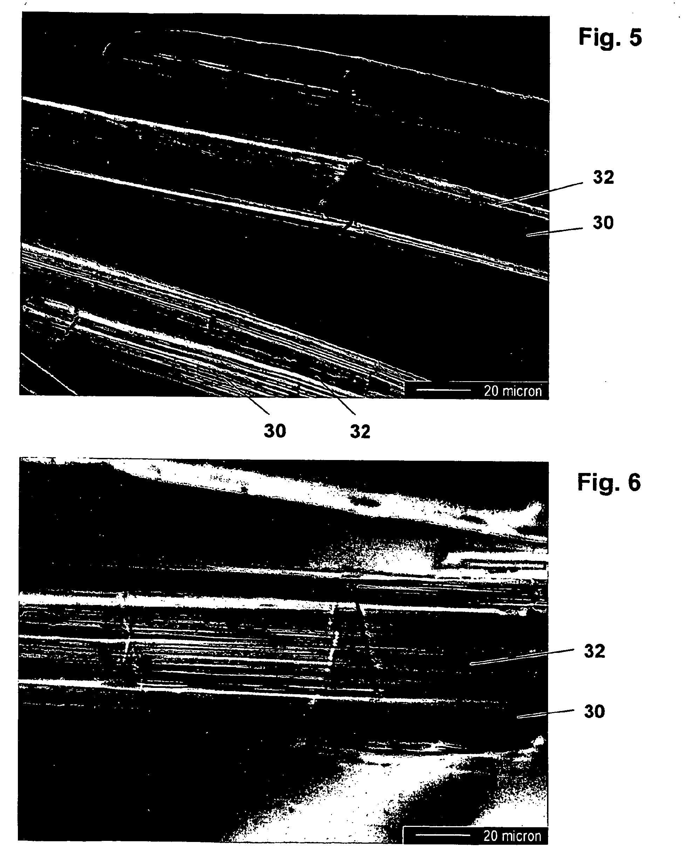

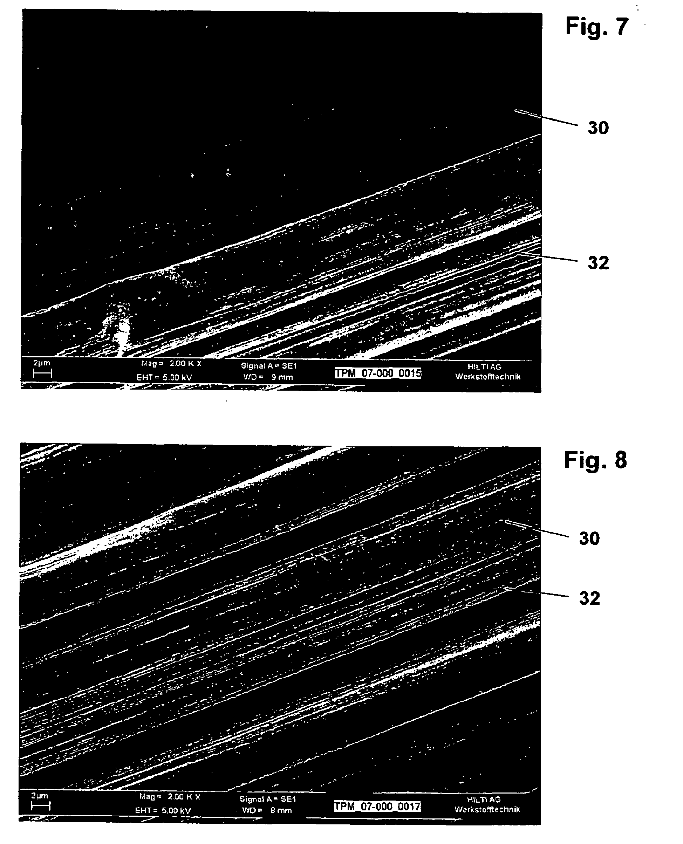

In den Figuren 5 bis 8 sind diese feinen Längsrillen 32 an verschiedenen Fibrillen 30 nochmals näher dargestellt.

## Patentansprüche

1. Verdunstungselement mit
- einer Diffusionsschicht (12), welche eine textile Struktur zum flächigen Verteilen einer zu verdunstenden Flüssigkeit aufweist, und
- einer Sperrschicht (16), welche flüssigkeitsdicht ist und an einer Seite der Diffusionsschicht (12) angeordnet ist,
**dadurch gekennzeichnet,**
- **dass** die textile Struktur der Diffusionsschicht (12) eine Vielzahl von Fibrillen (30) umfasst, die entlang ihrer Außenseite mit Längsrillen (32, 34) versehen sind, entlang welcher Flüssigkeit aufgrund eines Kapillareffektes leitbar ist.

2. Verdunstungselement nach Anspruch 1,
**dadurch gekennzeichnet,**
**dass** die Fibrillen (30) eine Vielzahl von Längsrillen (32, 34) aufweisen, deren Tiefe und Breite geringer als 1 µm sind.

3. Verdunstungselement nach einem der Ansprüche 1 oder 2,
**dadurch gekennzeichnet,**
**dass** die Fibrillen (30) mindestens eine rinnenartige Längsrille (34) aufweisen, deren Tiefe und Breite größer als 1 µm, vorzugsweise zwischen 1 µm und 5 µm sind.

4. Verdunstungselement nach einem der Ansprüche 1 bis 3,
**dadurch gekennzeichnet,**
**dass** die Fibrillen (30) einen Durchmesser von 10 µm bis 100 µm, vorzugsweise etwa 50 µm, aufweisen.

5. Verdunstungselement nach einem der Ansprüche 1 bis 4,
**dadurch gekennzeichnet,**
**dass** die textile Struktur der Diffusionsschicht (12) ein Gewebe mit einem Multifilgarn umfasst, welches die Vielzahl von Fibrillen (30) aufweist.

6. Verdunstungselement nach Anspruch 5,
**dadurch gekennzeichnet,**
**dass** das Multifilgarn aus 10.000 bis 300.000, vorzugsweise 100.000 bis 250.000 Fibrillen (30) pro cm² Querschnittsfläche aufgebaut ist und
**dass** der Abstand der Fibrillen (30) zueinander überwiegend kleiner als 2 µm ist.

7. Verdunstungselement nach einem der Ansprüche 1 bis 6,
**dadurch gekennzeichnet,**
**dass** die textile Struktur der Diffusionsschicht (12) an mindestens einer Seite eine poröse Verdampfungsschicht (14) aufweist.

8. Verdunstungselement nach einem der Ansprüche 1 bis 7,
**dadurch gekennzeichnet,**
**dass** die dichte Sperrschicht (16) eine Schichtdicke von 0,1 mm bis 1 mm aufweist.

9. Verdunstungselement nach einem der Ansprüche 1 bis 8,
**dadurch gekennzeichnet,**
**dass** mindestens eine Schutzschicht (18) mit einem Gewebe vorgesehen ist.

10. Verdunstungselement nach einem der Ansprüche 1 bis 9,
**dadurch gekennzeichnet,**
**dass** die Fibrillen aus einem Material gebildet sind, welches PET (Polyester), PEN (Polyethylene Naphtalate), PP (Polypropypylene), PEEK (Ployetheretherketone), LCP (Liquid Cristal Polyester), UHMWPE (Ultra high Molecularweight Polyethylene), PTFE (Polytetrafluorethylene), ETFE (Ethylene Tetrafluorethylene), PVDF (Polyvinilidenfluorid), PAC (Polyacrylnitril), einen mineralischen Werkstoff und/oder einen keramischen Werkstoff aufweist.

11. Verdunstungselement nach einem der Ansprüche 1 bis 10,
**dadurch gekennzeichnet,**
**dass** das Gewebe der Diffusionsschicht (12) hydrophil ausgebildet ist.

12. Verdunstungselement nach einem der Ansprüche 1 bis 11,
**dadurch gekennzeichnet,**
**dass** die Schichten (12, 14, 16, 18) miteinander verklebt oder verschweißt sind.

13. Verdunstungselement nach einem der Ansprüche 1 bis 12,
**dadurch gekennzeichnet,**
**dass** dieses aus Bahnen (20) ausgebildet ist, welche entlang ihrer Längskanten (22) miteinander verbunden, insbesondere verschweißt oder verklebt sind, wobei ein Nahtbereich (24) gebildet ist, und
**dass** entlang des Nahtbereiches (24) ein Zuführkanal (28) zum Zuführen und Abgeben der Flüssigkeit an die Diffusionsschicht (12) angeordnet ist.

14. Verfahren zum Herstellen eines Verdunstungselementes (10) aus Bahnen (20), die mit einer Diffusionsschicht (12) zum flächigen Verteilen einer zu verdunstenden Flüssigkeit und einer flüssigkeitsdichten Sperrschicht (16) versehen sind, wobei die Bahnen (20) entlang ihrer Längskanten (22) an einem Nahtbereich (24) miteinander verbunden werden,
**dadurch gekennzeichnet,**
**dass** entlang des Nahtbereiches (24) an den Längskanten (22) der Bahnen (20) ein Zuführkanal (28) zum Zuführen und Abgeben der Flüssigkeit an die Diffusionsschicht (12) angeordnet wird.

15. Verfahren nach Anspruch 14,
**dadurch gekennzeichnet,**
**dass** eine poröse Verdampfungsschicht (14), welche von der Flüssigkeit im dampfförmigen Zustand durchdringbar ist, angeordnet ist, welche im Bereich des Zuführkanals (28) zumindest bereichsweise entfernt wird.

## Claims

1. Evaporation element comprising
- a diffusion layer (12) which has a textile structure for the surface-distribution of a liquid to be evaporated,
- a blocking layer (16) which is liquid-tight and arranged on one side of the diffusion layer (12),
**characterized in that**
- the textile structure of the diffusion layer (12) includes a plurality of fibrils (30) that are provided along their exterior with longitudinal grooves (32, 34), along which liquid can pass by means of a capillary effect.

2. Evaporation element according to claim 1,
**characterized in that**
the fibrils (30) have a plurality of longitudinal grooves (32, 34), the depth and width of which are smaller than 1 µm.

3. Evaporation element according to any one of claims 1 or 2,
**characterized in that**
the fibrils (30) have at least one duct-like longitudinal groove (34), the depth and width of which are greater than 1 µm, preferably ranging between 1 µm and 5 µm.

4. Evaporation element according to any one of claims 1 to 3,
**characterized in that**
the fibrils (30) have a diameter ranging from 10 µm to 100 µm, preferably amounting to approximately 50 µm.

5. Evaporation element according to any one of claims 1 to 4,
**characterized in that**
the textile structure of the diffusion layer (12) comprises a fabric with a multifilament yarn that contains the plurality of fibrils (30).

6. Evaporation element according to claim 5,
**characterized in that**
the multifilament yarn is composed of 10,000 to 300,000, preferably of 100,000 to 250,000 fibrils (30) per cm² cross-sectional surface and
**in that** the mutual distance of the fibrils (30) is predominantly smaller than 2 µm.

7. Evaporation element according to any one of claims 1 to 6,
**characterized in that**
the textile structure of the diffusion layer (12) has a porous evaporation layer (14) on at least one side.

8. Evaporation element according to any one of claims 1 to 7,
**characterized in that**
the tight blocking layer (16) has a layer thickness ranging from 0,1 mm to 1 mm.

9. Evaporation element according to any one of claims 1 to 8,
**characterized in that**
at least one protective layer (18) with a fabric is provided.

10. Evaporation element according to any one of claims 1 to 9,
**characterized in that**
the fibrils are made of a material containing PETP (Polyester), PEN (Polyethylene Naphtalate), PP (Polypropylene), PEEK (Polyether-etherketone), LCP (Liquid Crystal Polyester), UHMWPE (Ultra-high Molecular-weight Polyethylene), PTFE (Polytetrafluorethylene), ETFE (Ethylene Tetrafluorethylene), PVDF (Polyvinilidenfluorid), PAC (Polyacryl-nitril), a mineral material and/or a ceramic material.

11. Evaporation element according to any one of claims 1 to 10,
**characterized in that**
the fabric of the diffusion layer (12) is designed in a hydrophilic manner.

12. Evaporation element according to any one of claims 1 to 11,
**characterized in that**
the layers (12, 14, 16, 18) are glued or welded to one another.

13. Evaporation element according to any one of claims 1 to 12,
**characterized in that**
the said element is formed of webs (20) that are joined to one another along their longitudinal edges (22), in particular by being welded or glued, and in doing so a seam portion (24) is formed, and
**in that** a feed channel (28) is arranged along the seam portion (24) for feeding and delivering the liquid to the diffusion layer (12).

14. Method for producing an evaporation element (10) out of webs (20) being provided with a diffusion layer (12) for the surface-distribution of a liquid to be evaporated and a liquid-tight blocking layer (16), the webs (20) being joined to one another along their longitudinal edges (22) on a seam portion (24),
**characterized in that**
a feed channel (28) is arranged along the seam portion (24) at the longitudinal edges (22) of the webs (20) for feeding and delivering the liquid to the diffusion layer (12).

15. Method according to claim 14,
**characterized in that**
a porous evaporation layer (14) is arranged, which can be penetrated by the liquid in the vaporous state and which is removed at least in sections in the portion of the feed channel (28).

## Revendications

1. Élément de vaporisation avec
- une couche de diffusion (12) qui présente une structure textile pour la répartition en surface d'un liquide à vaporiser, et
- une couche barrage (16) qui est imperméable au liquide et est placée sur un côté de la couche de diffusion (12),
**caractérisé en ce que**
- la structure textile de la couche de diffusion (12) comprend une pluralité de fibrilles (30) qui sont munies, le long de leur face extérieure, de rainures longitudinales (32, 34) le long desquelles un liquide peut être dirigé en raison de l'effet capillaire.

2. Élément de vaporisation selon la revendication 1, **caractérisé en ce que** les fibrilles (30) présentent une pluralité de rainures longitudinales (32, 34) dont la profondeur et la largeur sont inférieures à 1 µm.

3. Élément de vaporisation selon l'une des revendications 1 ou 2, **caractérisé en ce que** les fibrilles (30) présentent au moins une rainure longitudinale (34) de type goulotte dont la profondeur et la largeur sont supérieures à 1 µm, de préférence sont comprises entre 1 µm et 5 µm.

4. Élément de vaporisation selon l'une des revendications 1 à 3, **caractérisé en ce que** les fibrilles (30) présentent un diamètre de 10 µm à 100 µm, de préférence environ 50 µm.

5. Élément de vaporisation selon l'une des revendications 1 à 4, **caractérisé en ce que** la structure textile de la couche de diffusion (12) présente un tissu avec un fil multifilament, qui présente la pluralité de fibrilles (30).

6. Élément de vaporisation selon la revendication 5, **caractérisé en ce que** le fil multifilament est constitué de 10 000 à 300 000, de préférence de 100 000 à 250 000 fibrilles (30) par cm² de surface de section et **en ce que** la distance des fibrilles (30) entre elles est principalement inférieure à 2 µm.

7. Élément de vaporisation selon l'une des revendications 1 à 6, **caractérisé en ce que** la structure textile de la couche de diffusion (12) présente d'au moins un côté une couche d'évaporation poreuse (14).

8. Élément de vaporisation selon l'une des revendications 1 à 7, **caractérisé en ce que** la couche barrage imperméable (16) présente une épaisseur de couche de 0,1 mm à 1 mm.

9. Élément de vaporisation selon l'une des revendications 1 à 8, **caractérisé en ce qu'**au moins une couche protectrice (18) avec un tissu est prévue.

10. Élément de vaporisation selon l'une des revendications 1 à 9, **caractérisé en ce que** les fibrilles sont formées d'un matériau qui présente du PET (polyester), du PEN (polyéthylène naphtalate), du PP (poplypropylène), du PPEK (polyétheréthercétone), du LCP (Liquid Cristal Polyester), de l'UHMWPE (Ultra High Molecular Weight Polyethylene), du PTFE (polytétrafluoroéthylène), de l'ETFE (éthylène tétrafluoroéthylène), du PVDF (fluorure de polyvinylidène), du PAC (polyacrylonitrile), un matériau minéral et/ou un matériau céramique.

11. Élément de vaporisation selon l'une des revendications 1 à 10, **caractérisé en ce que** le tissu de la couche de diffusion (12) est réalisé hydrophile.

12. Élément de vaporisation selon l'une des revendications 1 à 11, **caractérisé en ce que** les couches (12, 14, 16, 18) sont collées ou soudées entre elles.

13. Élément de vaporisation selon l'une des revendications 1 à 12, **caractérisé en ce qu'**il est composé de bandes (20) qui sont reliées entre elles le long de leurs bords longitudinaux (22), en particulier par soudage ou collage, une zone de jonction (24) étant formée, et
**en ce que** le long de la zone de jonction (24) se trouve un canal d'alimentation (28) pour alimenter et délivrer le liquide à la couche de diffusion (12).

14. Procédé de fabrication d'un élément de vaporisation (10) à partir de bandes (20), qui sont munies d'une couche de diffusion (12) pour la répartition en surface d'un liquide à vaporiser, et d'une couche barrage (16) imperméable au liquide, les bandes (20) étant reliées entre elles le long de leurs bords longitudinaux (22) au niveau d'une zone de jonction (24),
**caractérisé en ce que** le long de la zone de jonction (24) sur les bords longitudinaux (22) des bandes se trouve un canal d'alimentation (28) pour alimenter et délivrer le liquide à la couche de diffusion (12).

15. Procédé selon la revendication 14, **caractérisé en ce qu'**une couche d'évaporation poreuse (14) pouvant être traversée par le liquide à l'état vapeur est prévue, couche qui est retirée au moins par zones au niveau du canal d'alimentation (28).
